# EUROPÄISCHE PATENTANMELDUNG

(11) **EP 1 026 537 A1**
(43) Veröffentlichungstag der Anmeldung: **09.08.2000**
(21) Anmeldenummer: 98124015.3
(22) Anmeldetag: 17.12.1998
(51) Int. Cl.: G02B 27/06

(54) **Vorrichtung zur Darstellung einer Bildfolge**

(71) Anmelder: Glashaus Fassadensysteme GmbH, 80805 München (DE)
(72) Erfinder: Klemt, Athur, 80805 München (DE)

(57) **Zusammenfassung**

Bei einer Vorrichtung zur Darstellung einer aus einer Vielzahl von Einzelbildern bestehenden Bildfolge, mit einer ein Sichtfenster aufweisenden Abdeckplatte und einer drehbar gelagerten Drehscheibe, auf der mit gleichem Abstand zu ihrer Drehachse in Umfangsrichtung verteilt eine Vielzahl von Einzelbildern angebracht ist, die beim Verdrehen der Drehscheibe an dem Sichtfenster der Abdeckplatte vorbeigeführt wird, und wobei die Vorrichtung ferner eine manuell kontinuierlich betätigbare Antriebseinrichtung zum intermittierenden Antrieb der Drehscheibe aufweist, wird eine für den Benutzer möglichst realistische Darstellung eines Bewegungsablaufes dadurch geschaffen, daß die Vorrichtung eine Vorspanneinrichtung, die die Drehscheibe in den Ruhephasen ihrer intermittierenden Bewegung für eine zum Bildwechsel dienende Weiterdrehung der Drehscheibe vorspannt, aufweist.

## Beschreibung

Die vorliegende Erfindung betrifft eine Vorrichtung zur Darstellung einer, aus einer Vielzahl von Einzelbildern bestehenden, Bildfolge gemäß den Oberbegriffen der Patentansprüche 1 bis 4. In einem weiteren Aspekt betrifft die vorliegende Erfindung eine Vorrichtung zur Darstellung einer, aus einer Vielzahl von Einzelbildern bestehenden, Bildfolge gemäß Patentanspruch 5.

Hinsichtlich des Standes der Technik wird auf das deutsche Gebrauchsmuster G 93 00 427.3 verwiesen. Aus dieser Druckschrift ist eine scheibenartige Vorrichtung zur Darstellung veränderbarer Bilder bekannt, die eine undurchsichtige vordere Platte und eine verdrehbare Drehscheibe, auf der mit gleichem Abstand zu ihrer Drehachse in Umfangsrichtung verteilt eine Mehrzahl von Einzelbildern angebracht ist, die beim Verdrehen der Drehscheibe an einem in der vorderen Platte ausgebildeten Sichtfenster vorbeigeführt werden, aufweist, wobei die Einzelbilder die Bildfolge eines Bewegungsablaufes darstellen, und wobei zum Verdrehen der Drehscheibe eine manuell kontinuierlich betätigbare Antriebseinrichtung vorgesehen ist, mittels der die Drehscheibe intermittierend so antreibar ist, daß jeweils bei Stillstand der intermittierend angetriebenen Drehscheibe entsprechend der durch die Bildfolge vorgegebenen Reihenfolge jeweils ein Einzelbild der Bildfolge hinter dem Sichtfenster der vorderen Platte erscheint. Die Offenbarung dieser Druckschrift wird durch diese Bezugnahme in die Offenbarung der vorliegenden Anmeldung mitaufgenommen.

Im Sinne dieser Druckschrift wird unter dem Ausdruck "intermittierend" verstanden, daß das hinter dem Sichtfenster erscheinende Einzelbild zunächst stillsteht und dann mit einer Geschwindigkeit, die durch die Drehgeschwindigkeit der manuell angetriebenen Antriebsvorrichtung bestimmt wird und von derselben Größenordung ist, weiterbewegt wird. Daher besteht ein Nachteil der obengenannten Vorrichtung darin, daß die Bildwechselgeschwindigkeit durch die maximale manuelle Drehgeschwindigkeit begrenzt ist. Ebenso ist bei der bekannten Vorrichtung die Zeit die ein Bildwechsel benötigt von derselben Größenordnung wie die Zeitspanne die ein Bild hinter dem Sichtfenster verweilt. Daher ist es mit der obengenannten Vorrichtung nicht möglich, einen für das menschliche Auge kontinuierlich erscheinenden Bewegungsablauf darzustellen.

Ein weiterer Nachteil der obengenannten Vorrichtung besteht darin, daß die Einzelbilder nicht auf eine definierte Art hinter dem Sichtfenster zum Stillstand kommen, da diese durch ein manuell betätigtes "Anstoßen" der Drehscheibe weiterbewegt werden. Aufgrund der Trägheit der Drehscheibe kann es daher dazu kommen, daß insbesondere bei einer ungleichmäßigen oder zu starken Drehung der Antriebsscheibe, ein Bild hinter dem Sichtfenster erscheint, das nicht ein definiertes Einzelbild der Bildfolge ist sondern aus zwei Teilen von Einzelbildern besteht.

Schließlich ist bei der obengenannten Vorrichtung ferner nachteilig, daß sie in der Fläche zu platzaufwendig ist. Die Ausdehnung der Vorrichtung in der Fläche wird nämlich durch die im wesentlichen nebeneinanderliegenden Drehscheibe und Antriebsscheibe bestimmt.

Die Aufgabe der vorliegenden Erfindung besteht daher darin, die Nachteile des Standes der Technik zu vermeiden und insbesondere eine in der Herstellung kostengünstige, als Massenartikel geeignete und kompakte Vorrichtung zur Darstellung einer Bildfolge zu schaffen, mit der für den Benutzer die Darstellung eines möglichst realistischen Bewegungsablaufes in einem Sichtfenster erfolgen kann.

Diese Aufgabe wird bei einer Vorrichtung der eingangs genannten Art durch die im kennzeichnenden Teil der Ansprüche 1 bis 4 angegebenen Merkmale bzw. durch die in Anspruch 5 angegebenene Merkmalskombination gelöst.

Weitere bevorzugte Ausführungsformen der Erfindung sind in den abhängigen Patentansprüchen offenbart.

Die Erfindung, sowie weitere Ausgestaltungen und Vorteile derselben wird bzw. werden nachfolgend anhand von Ausführungsbeispielen unter Bezugnahme auf die Zeichnungen erläutert. In den Zeichnungen zeigt:
- Figur 1: eine schematische Darstellung einer Draufsicht auf ein erstes Ausführungsbeispiel der erfindungsgemäßen Vorrichtung;
- Figur 2: eine schematische Darstellung einer Draufsicht auf die Vorrichtung der Figur 1, und zwar ohne vordere und hintere Platte zur Veranschaulichung der Wirkungsweise;
- Figur 3: eine schematische Darstellung zur Veranschaulichung der Funktionsweise und des Betriebs der Vorrichtung gemäß den Figuren 1 und 2;
- Figur 4: eine schematische Darstellung einer Draufsicht auf eine Drehscheibe gemäß einem zweitem Ausführungsbeispiel der vorliegenden Erfindung;
- Figur 5: eine schematische Darstellung zur Veranschaulichung der Funktionsweise und des Betriebs des in Figur 4 gezeigten zweiten Ausführungsbeispiels der Erfindung;
- Figur 6: eine schematische, teilweise weggebrochene Darstellung eines dritten Ausführungsbeispiels der vorliegenden Erfindung;
- Figur 7: eine schematische, teilweise weggebrochene Darstellung einer Variante zu dem in Figur 6 gezeigten dritten Ausführungsbeispiel der vorliegenden Erfindung;
- Figuren 8 bis 10: schematische Darstellungen der Verwendung der erfindungsgemäßen Vorrichtung in der Werbung zur Verwendung als Beilage in einer Zeitschrift (Figur 8) oder bei Versendung mit der Post (Figuren 9 und 10);
- Figur 11: eine schematische, teilweise weggebrochene Darstellung einer Draufsicht auf ein viertes Ausführungsbeispiel der vorliegenden Erfindung; und
- Figur 12: eine schematische Querschnittsansicht auf ein fünftes Ausführungsbeispiel der vorliegenden Erfindung.

Überall in den Zeichnungen bezeichnen dieselben bzw. ähnliche Bezugszeichen dieselben bzw. ähnliche Elemente.

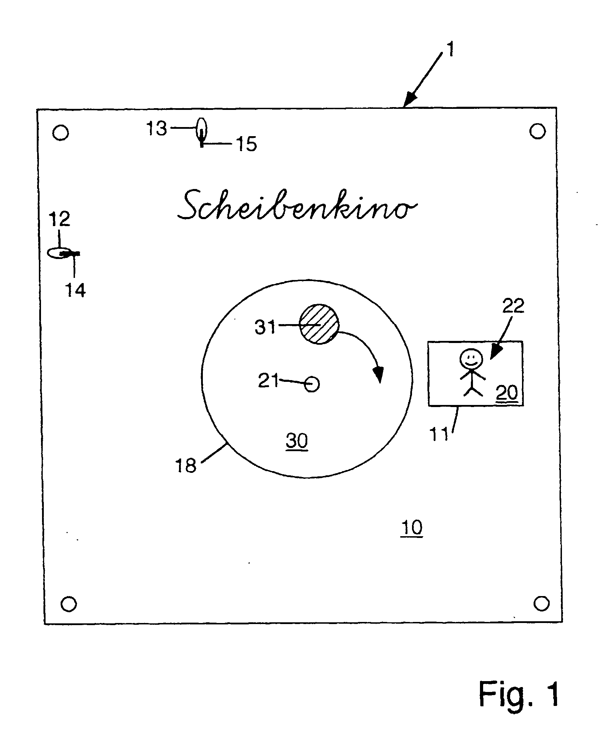

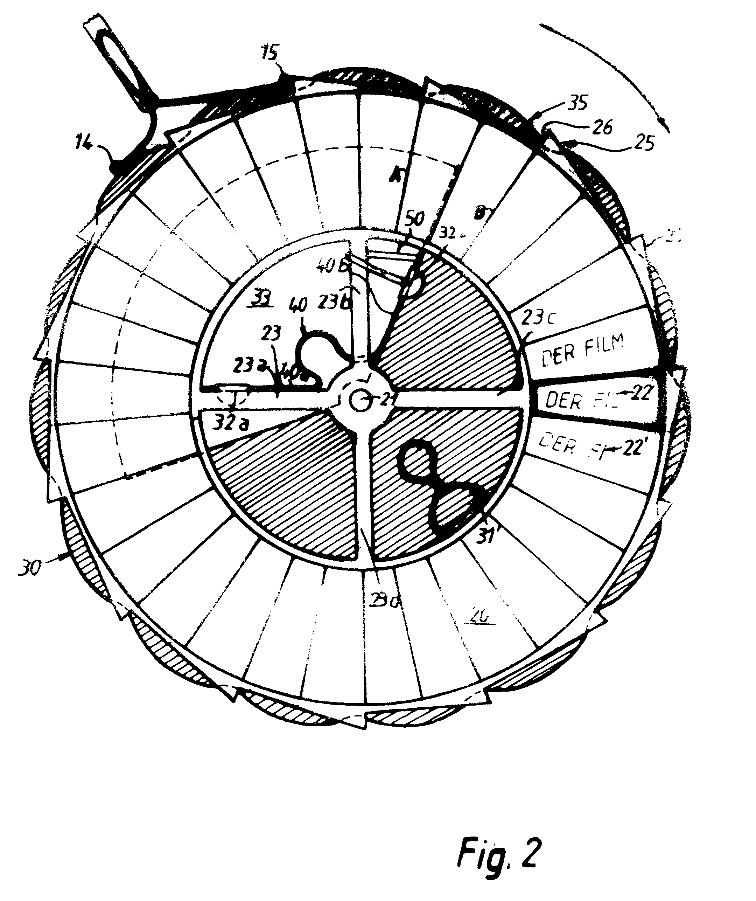

In Figur 1 ist eine schematische Draufsicht auf ein erstes Ausführungsbeispiel einer erfindungsgemäßen Vorrichtung 1 zur Darstellung einer, aus einer Vielzahl von Einzelbildern 22 bestehenden, Bildfolge eines Bewegungsablaufs gezeigt. Die Vorrichtung 1 weist eine vordere Platte 10 und eine (nicht dargestellte) hintere Platte auf. Zwischen der vorderen Platte 10 und der hinteren Platte sind eine Drehscheibe 20 und eine Antriebsscheibe 30 angeordnet. Dabei ist, gemäß der Darstellung der Figur 1, die Drehscheibe 20 im wesentlichen deckungsgleich, konzentrisch zu und über der Antriebsscheibe 30 angeordnet. Auf der Drehscheibe 20 sind die Einzelbilder 22 derart angeordnet, daß bei Drehung der Drehscheibe jeweils ein Einzelbild 22 hinter einem Sichtfenster 11 der vorderen Platte 10 zur Ansicht gebracht werden kann. Die Drehscheibe 20 und die Antriebsscheibe 30 sind mit einer Niete 25 konzentrisch an ihrem Mittelpunkt drehbar mit der (nicht dargestellten) hinteren Platte absolut und relativ zueinander drehbar verbunden. Die vordere Platte 10 weist eine mittig angeordnete kreisförmige Ausnehmung 18 auf. Die Ausnehmung 18 ist konzentrisch um die Niete 25 angeordnet. Die Antriebsscheibe 30 besitzt ein Formelement 31, z.B. eine Fingermulde, in die der Benutzer der erfindungsgemäßen Vorrichtung seinen Finger legen kann um die Antriebsscheibe 30 zu drehen. Alternativ kann das Formelement 31, wie in Figur 2 dargestellt, ein aus der Zeichenebene schwenkbares Element, wie z.B. eine Kurbel 31', sein. Anstelle der Kurbel 31' oder der als Fingermulde dienenden Vertiefung 31 können auch andere geeignete Formelemente für einen Eingriff eines Fingers eines Benutzers zum Antrieb der Scheibe 30 verwendet werden. So kann z.B. die Vertiefung 31 auch als durchgehendes Loch in der Antriebsscheibe 30 ausgeführt sein. Jedoch kann auch schon eine aufgerauhte Oberfläche der Antriebsscheibe 30 manchmal bereits ausreichend sein, um einen guten Wirkeingriff zwischen der Antriebsscheibe 30 und dem Finger für ihre Betätigung sicherzustellen. Ferner weist die vordere Platte 10 zwei Ausnehmungen 12, 13 auf, durch die zwei im wesentlichen radial nach innen vorgespannte Federdrahtelemente 14 bzw. 15 geführt sind.

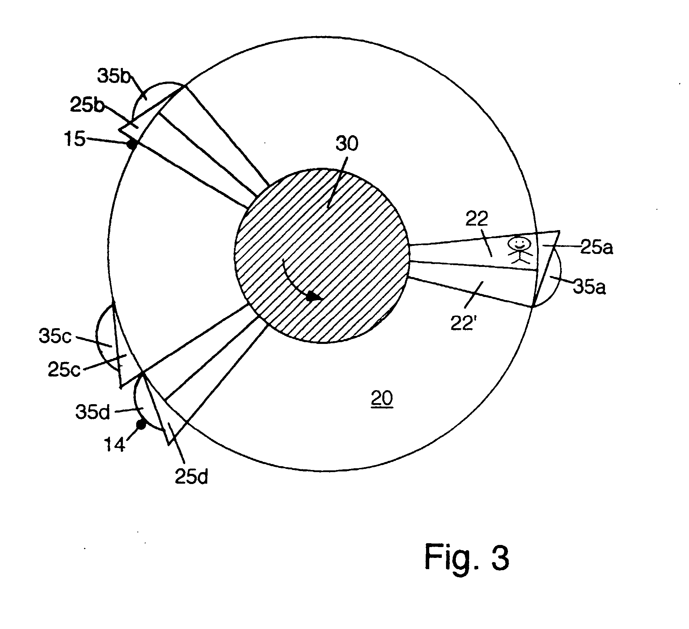

Aufgrund eines im folgenden zu beschreibenden Antriebsmechanismus treibt die manuell an dem Formelement 31 in Pfeilrichtung (Betriebsrichtung = Gegenuhrzeigersinn) angetriebene Antriebsscheibe bei einer kontinuierlichen Drehbewegung die hinter der vorderen Platte 10 befindlichen Drehscheibe 20 intermittierend an, so daß die Einzelbilder 22 auf der Drehscheibe nacheinander in dem Sichtfenster 11 erscheinen. Dabei stehen die Einzelbilder 22 eine Zeit lang still, bevor ein -im Vergleich zur Verweilzeit eines Bildes 22- schneller Wechsel zum nächsten Bild erfolgt. Die Bildfolge der Einzelbilder 22 stellt vorzugsweise die Abfolge von Momentaufnahmen eines Bewegungsablaufs dar. Aufgrund des intermittierenden Antriebs entsteht dann im Sichtfenster 11 der Eindruck einer kontinuerlich ablaufenden Bewegung nach Art eines Films. Die Funktionsweise der erfindungsgemäßen Vorrichtung wird im folgenden anhand der Figuren 2 und 3 verdeutlicht.

Der Darstellung der Figur 2 entnimmt man, daß die vordere Drehscheibe 20 vorzugsweise zweiunddreißig umfangsmäßig verteilte, sektorartig angeordnete Einzelbilder 22, 22',... aufweist, die eine Abfolge von Momentaufnahmen eines Bewegungsablaufs darstellen. Die Drehscheibe 20 ist an ihrem Umfang mit sechzehn Zähnen 25 versehen. Jeder Zahn 25 weist eine relativ kurze Zahnflanke 26 auf, die sich in radialer Richtung, eine Bildgrenze zwischen zwei Einzelbildern 22 verlängernd, erstreckt. Ferner weist der Zahn 25 eine relativ lange Zahnflanke 27 auf, die mit der Zahnflanke 26 einen spitzen Winkel bildet und die sich über zwei Einzelbilder 22 der Bildfolge der Drehscheibe 20 erstreckt. Die hintere Antriebsscheibe 30 weist sechzehn umfangsmäßig konvex ausgebildete Nocken 35 auf. Dabei entspricht die Höhe (Radialausdehnung) der Nocken 35 im wesentlichen der Höhe der steilen Zahnflanke 26. Der Nocken 35 erstreckt sich ebenfalls wie der Zahn 25 über zwei Einzelbilder 22, 22' der Drehscheibe 20. Durch die Nietverbindung 21 sind beide Scheiben 20 und 30 relativ zueinander um eine konzentrische Drehachse verdrehbar. Ein Federelement, wie z.B. ein gebogener Federdraht 40, der als Zugfeder wirkt, verbindet die Drehscheibe 20 und die Antriebsscheibe 30 miteinander und sorgt für eine gegenseitige relative Vorspannung. Die Antriebsscheibe 20 weist innerhalb des aus Einzelbildern 22 bestehenden Rings vier Aussparungen 24a, 24b, 24c und 24d mit jeweils der Form eines Viertelkreises auf, so daß in ihrem Inneren ein aus vier Stegen 23a, 23b, 23c und 23d bestehendes Kreuz 23 ausgebildet ist. Ein Schenkel 40a des Federdrahts 40 ist über eine umgebogene und festgeklebte Lasche 32a an dem Steg bzw. Schenkel 23a befestigt. Ein gegenüberliegendes Ende 40b des Federdrahts 40 ist über eine umgebogene und festgeklebte Lasche 32b mit der Antriebsscheibe 30 verbunden. Die Antriebsscheibe 30 besitzt am Ort des Federdrahts 40 eine sektorartige Aussparung 33, so daß der Federdraht 40 die Dicke der Vorrichtung nicht erhöht. Anstelle des Federdrahtelements 40 kann auch ein an der Drehscheibe 20 und der Antriebsscheibe 30 befestigtes (nicht gezeigtes) Gummiband vorgesehen sein. Ferner ist ein Anschlagelement 50 vorgesehen, um die Relativbewegung der beiden Scheiben 20, 30 beidseitig zu begrenzen. Das Anschlagelement 50 ist im wesentlichen eine umgebogene Lasche bzw. ein umgebogener Fortsatz, der einstückig mit der der Antriebsscheibe 30 ausgebildet ist und sich in die Aussparung 33 erstreckt. Das Anschlagelement 50 ist unter dem Steg 23b durchgeführt und um diesen herum wieder an der Antriebsscheibe 30 durch eine Klebeverbindung befestigt ist. Das Anschlagelement 50 bildet somit eine Lasche, die die Relativbewegung der Drehscheibe 20 und der Antriebsscheibe 30 durch Halten des Steges 23b in dem durch die Linien A und B (zwei Einzelbilder) vorgegebenen Winkelbereich beschränkt.

Die Antriebsscheibe 30 weist zum Antrieb durch den Benutzer eine Kurbel 31' auf, die dem Formelement 31 der Figur 1 entspricht. Die Kurbel 31' ist aus einem Draht gebogen und kann vom Benutzer hochgeklappt werden, um die Drehscheibe 30 entlang der in Figur 1 durch einen Pfeil angegebenen Drehrichtung zu drehen. Die Betriebsrichtung der in Figur 2 dargestellten erfindungsgemäßen Vorrichtung ist dabei -aufgrund der Ausbildung der Zähne 25- im Gegenuhrzeigersinn. Die Kurbel 31' ist dabei unabhängig von der durch das Anschlagelement 50 begrenzten Relativposition der Scheiben 20, 30 immer in der Ausnehmung 22d angeordnet. Dadurch ist die Kurbel 31' über die Ausnehmung 18 in der vorderen Platte 10 stets für den Benutzer zugänglich.

Ferner entnimmt man der Figur 2, daß die erfindungsgemäße Vorrichtung 1 zwei radial nach innen vorgespannte Federelemente 14, 15 aufweist, die umfangsmäßig um eine ungerade Anzahl (in dem gezeigten Beispiel drei) von Einzelbildern 22 der Drehscheibe 20 angeordnet sind. Die Federelemente 14, 15 können unabhängig voneinander oder zusammenarbeitend nach Art einer Wippe ausgebildet sei. Der Betrieb der erfindungsgemäßen Vorrichtung und die Funktion der Federelemente 14, 15 kann am besten unter Bezugnahme auf die Figur 3 verstanden werden.

In Figur 3 sind nur vier Zähne 25a, 25b, 25c und 25d der sechzehn Zähne 25 der Drehscheibe 20 dargestellt. Ferner sind in Figur 3 lediglich vier Nocken 35a, 35b, 35c und 35d der sechzehn Nocken 35 der Antriebsscheibe 30 gezeigt. In Figur 3 ist eine Betriebsstellung dargestellt, in der hinter dem Sichtfenster 11 der vorderen Platte 10 ein Einzelbild 22 sichtbar ist. Die Drehscheibe 20 ist dabei durch das Federelement 15 an dem Zahn 25b blockiert. Wird nun die Antriebsscheibe gemäß der Pfeilrichtung im Gegenuhrzeigersinn weiter gedreht bzw. angetrieben, so bleibt zunächst die Drehscheibe 20 durch die Sperrung des Zahns 25b blockiert. Allerdings beginnt der Nocken 35b durch eine Bewegung in Pfeilrichtung das Federelement 15 gegen dessen Vorspannung nach außen zu bewegen. Während dieser Bewegung bewegt sich das Federelement 14 entlang der durch den Nocken 35d vorgegebenen Kurve nach innen. Ist etwa die Mitte, d.h. der höchste Bereich, des Nockens 35b an dem Federelement 15 angelangt, so wird der Zahn 25b freigegeben. Als Folge bewegt sich die Drehscheibe 20 um 1/32 einer vollen Umdrehung im Gegenuhrzeigersinn weiter, so daß am Sichtfenster 11 das nächste Einzelbild 22' sichtbar wird. Dabei wird durch die Blockierung des Zahns 35c an dem Federelement 14 sichergestellt, daß sich die Drehscheibe 20 nur um eine 1/32-Umdrehung bzw. Einzelbild 22 weiterbewegt. Der Wechsel von dem Einzelbild 22 zu dem Einzelbild 22' erfolgt bei der erfindungsgemäßen Vorrichtung nicht bestimmt durch die konstante Drehung der Antriebsscheibe 30 sondern durch die Spannung des Federdrahts 40, der während der Bewegung des Federelements 40 zu dem höchsten Punkt des Nockens 35b weiter vorgespannt wird. Im Gegensatz zu der bekannten Vorrichtung bestimmt gemäß der vorliegenden Erfindung die Drehgeschwindigkeit der Antriebsscheibe lediglich die Anzahl der pro Zeiteinheit 11 der vorderen Platte 10 sichtbaren Bilder, nicht aber die Wechselgeschwindigkeit eines Bildes. Letztere wird nämlich durch die Spannung des Federelement bzw. Gummibands 40 bestimmt. Aufgrund der unterschiedlichen Zeitskalen der Verweilzeit eines Bildes und der Zeit eines Bildwechsels, die durch die erfindungsgemäß unterschiedlichen Antriebsmechanismen (manueller Drehantrieb/Antrieb durch Vorspannung) erfolgt, ist bei der erfindungsgemäßen Vorrichtung der durch die Abfolge der Einzelbilder 22 vorgegebene Bewegungsablauf wesentlich naturgetreuer als bei der bekannten Vorrichtung.

Während des Antriebs der Drehscheibe 30 bewegen sich also die Federelemente 14, 15 alternierend in radialer Richtung auf und ab. Die Verwendung von lediglich einem einzigen Federelement, z. B. dem Federelement 15, ist zwar möglich, hat sich in der Praxis nicht übermäßig bewährt, da die durch die Spannung des Federdrahts 40 beschleunigte Drehung der Drehscheibe so schnell ist, daß das Federelement 15 sich nicht zur Blockade des nächsten (nicht dargestellten) Zahns 25 zurückbewegen kann. Bei der Verwendung von einem Federelement ist also ein definierter Bildwechsel zum nächsten Einzelbild nur schwer zu realisieren. Wie der Figur 1 zu entnehmen ist, besitzen die Federelemente 14, 15 ein umgebogenes Ende, das über die vordere Platte 10 gebogen ist, so daß die Federelemente 14, 15 auch zur Führung der Scheiben 20, 30 dienen.

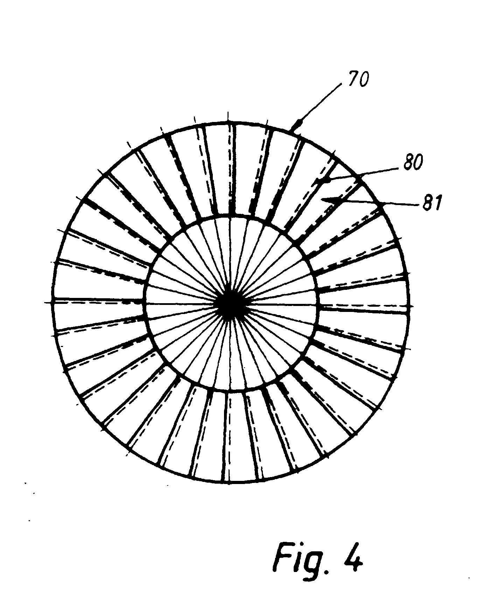

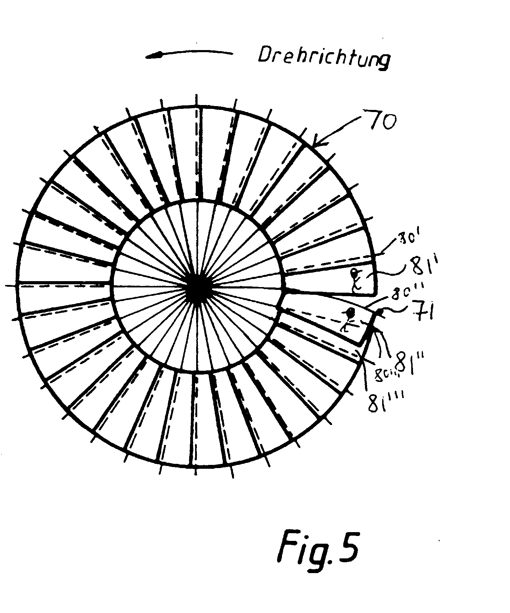

Der Darstellung der Figur 4, die eine schematische Draufsicht einer Drehscheibe gemäß einem zweitem Ausführungsbeispiel der vorliegenden Erfindung zeigt, entnimmt man, daß die Drehscheibe 70 nach Art eines Speichenrads ausgebildet ist. Die Drehscheibe 70 weist vorzugsweise zweiunddreißig radial stern- bzw. strahlenförmig nach außen angeordnete, und teilweise gestrichelt gezeichnete Drähte 80 auf, die tangential äquidistant angeordnet sind. An einem radial äußeren Abschnitt weist jeder Draht 80 der Drehscheibe 70 ein sektorabschnittförmiges Fähnchen oder Plättchen 81 auf. Auf den Fähnchen 81 sind Einzelbilder eines kontinuierlich ablaufenden Bewegungsablaufs gezeigt. Die Drähte 80 ragen dabei radial um ein kleines Stück über die Fähnchen 81 heraus, was für den Betrieb der in der Figur 4 gezeigten Ausführungsform der Erfindung erforderlich ist, wie im folgenden in Zusammenhang mit der Figur 5 erklärt wird. Die gesamte Anordnung der Figur 4 besitzt eine 32-zählige Symmetrie. Die Drähte 80 sind in etwa an dem Mittelpunkt der Scheibe 70 an einem Endpunkt starr miteinander verbunden und die gesamte Scheibe 70 ist beispielsweise um eine (nicht dargestellte) Niete an einer (nicht dargestellten) Grundplatte drehbar befestigt. Dreht man nun die Scheibe 70 in der Betriebsrichtung, d.h. im Gegenuhrzeigersinn, so wird in einem (nicht dargestellten) Sichtfenster einer (nicht dargestellten) vorderen Abdeckplatte jeweils ein, auf einem Fähnchen 81 aufgebrachtes Bild eines kontinuierlich ablaufenden Bewegungsablaufs sichtbar.

Zur Erläuterung des Betriebs und der Funktionsweise des in Figur 4 gezeigten zweiten Ausführungsbeispiels der vorliegenden Erfindung wird im folgenden auf Figur 5 Bezug genommen. In Figur 5 ist ein vertikal, aus der Papierebene herausragender Stift oder Bolzen (Anschlagelement) 71 schematisch dargestellt. Wird nun die Scheibe 70 in der in Figur 5 durch einen Pfeil gezeigten Drehrichtung manuell oder durch eine (nicht dargestellte) Antriebsvorrichtung um deren Mittelachse gedreht, so wird der Federdraht 80" an seinem über das Fähnchen 81" radial nach außen ragendem Ende an dem Stift 71 blockiert. Bei einer weiteren Drehung im Gegenuhrzeigersinn der Scheibe 70 wird nun der Draht 80" weiter vorgespannt, und zwar bis die Spannung des Federdrahts 80" ausreicht, um an dem Blockierstift 71 vorbeizuschnellen. Der Draht 80 mit dem daran angebrachten Fähnchen 81" nimmt nach der Freigabe durch den Stift 71 die Position des in Figur 5 gezeigten Drahtes 80' mit dem daran angebrachten Fähnchen 81' ein. Die Bildwechselgeschwindigkeit wird daher bei dieser Ausführungsform durch die Spannkraft des Federdrahts 80 bestimmt. Über der Drehscheibe 70 ist eine (nicht dargestellte) vordere Abdeckplatte mit einem Sichtfenster angeordnet, wobei das Sichtfenster (bei einer Drehung im Gegenuhrzeigersinn) unterhalb des Blockierstifts 71 angeordnet ist, d.h. in etwa auf dem in Figur 5 dargestellten Fähnchen 81". Durch das Sichtfenster kann man also über die Zeitspanne, in der der Draht 80" gespannt wird das auf dem Fähnchen 81" aufgebrachte Bild betrachten. Die sich durch die Verbiegung des Federdrahts 80" ergebende Beeinträchtigung des auf dem Fähnchen 81" dargestellten Bildes kann in der Praxis vernachlässigt werden.

Der Vorteil des in den Figuren 4 und 5 gezeigten zweiten Ausführungsbeispiels der vorliegenden Erfindung gegenüber dem in den Figuren 1 bis 3 gezeigten ersten Ausführungsbeispiel der Erfindung besteht im wesentlichen darin, daß die zum Verdrehen der Scheibe 70 erforderliche Kraft bei dem zweiten Ausführungsbeispiel nur dazu aufgebracht werden muß, um ein Einzelbild anstelle der gesamten Scheibe zu verdrehen. Da ein Einzelbild gegenüber der ganzen Scheibe eine wesentlich geringere Masse besitzt, ist die zum Verdrehen erforderliche Kraft bei dem zweiten Ausführungsbeispiel wesentlich geringer als bei dem ersten Ausführungsbeispiel der Erfindung.

Ferner wird bei dem zweitem Ausführungsbeispiel nur eine Scheibe, nämlich die Bilderscheibe 70 verwendet und die Funktion der Antriebs- bzw. Freigabescheibe 30 und die der Zähne 25 der Bilderscheibe 20 des in den Figuren 1 bis 3 gezeigten ersten Ausführungsbeispiels wird durch die Blockierung bzw. Freigabe des Drahts 80" an dem Stift 71 übernommen. Schließlich ist er bei dem zweitem Ausführungsbeispiel vorteilhaft, daß die Größe des Sichtfensters bzw. die Länge des darzustellenden Films nicht so stark eingeschränkt ist, wie bei dem ersten Ausführungsbeispiel der vorliegenden Erfindung. So kann bei ansonsten gleicher Wirkungsweise der Vorrichtung ein größeres Sichtfenster dadurch erreicht werden, daß die Fähnchen 81 zusammen mit dem Sichtfenster größer ausgebildet werden. Im Gegensatz dazu ist nämlich bei dem ersten Ausführungsbeispiel die Größe und Form eines Einzelbildes 22 durch die vorgegebene Unterteilung der Bilderscheibe 20 begrenzt. Ferner kann bei dem zweitem Ausführungsbeispiel der vorliegenden Erfindung auch die Anzahl der Bilder 81, und damit die Länge des zu zeigenden Films, einfach durch Erhöhen der Anzahl der Drähte 80 mit daran angeordneten Plättchen 81 vergrößert werden. Allerdings wird dabei der überlappende Bereich zwischen benachbarten Fähnchen 81 vergrößert, wobei sogar der Fall einer Mehrfachüberlappung der Fähnchen 81 auftreten kann (in den Fig. 4 und 5 überlappen sich jeweils nur zwei Fähnchen). Dem kann beispielsweise dadurch Rechnung getragen werden, daß die Drähte 81 nicht mehr im wesentlichen in einer Ebene, sondern vertikal, d.h. aus der Papierebene heraus bzw. hinein und in radialer Richtung zueinander versetzt sind, wobei der Blockierstift 71 sich über die vertikale Erstreckung der Federdrähte 80 erstreckt.

Es sei an dieser Stelle bemerkt, daß bei dem in den Figuren 4 und 5 gezeigten zweiten Ausführungsbeispiel der vorliegenden Erfindung die Form der Fähnchen 81 nicht auf einen Sektorabschnitt, d.h. mit einer radial nach innen ausgebildeten Verjüngung, wie es bei den Bildern 22 der Bilderscheibe 70 des ersten Ausführungsbeispiels der Fall ist, beschränkt ist. Stattdessen kann bei dem zweitem Ausführungsbeispiel ein auf einem Fähnchen 81 angeordnetes Einzelbild auch beispielsweise eine rechteckige Form besitzen.

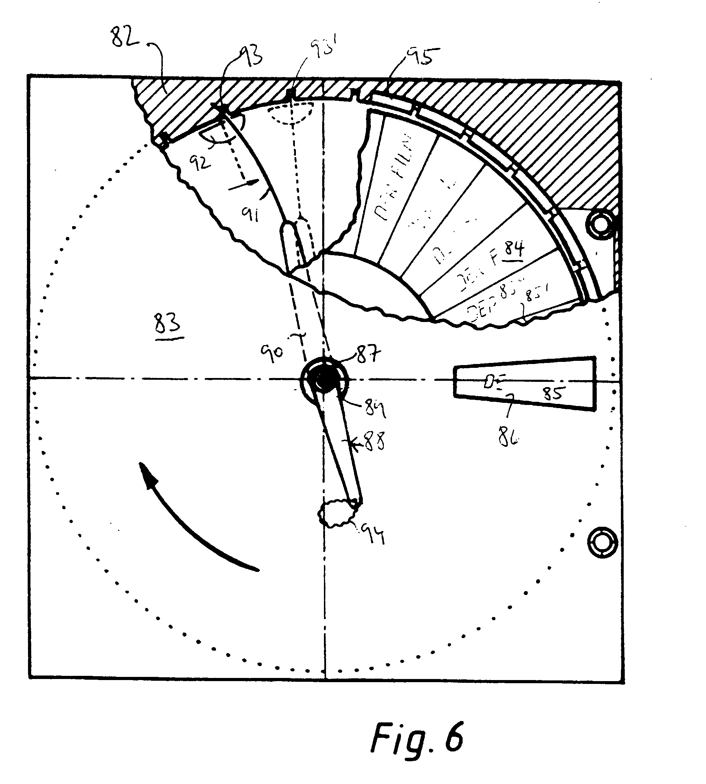

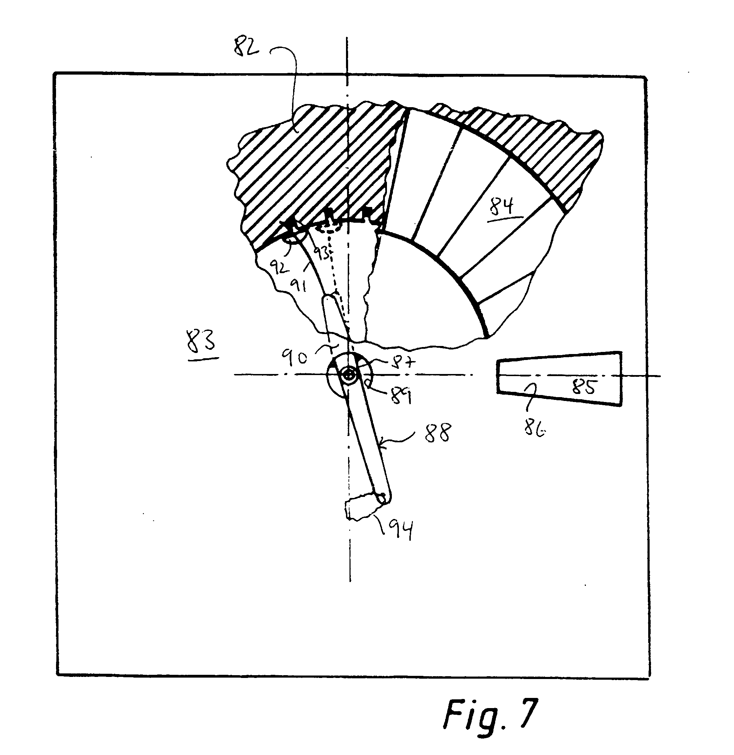

In Figur 6 ist schematisch eine teilweise weggebrochene Ansicht auf ein drittes Ausführungsbeispiel der vorliegenden Erfindung gezeigt. Zwischen einer schraffiert gezeichneten hinteren Platte 82 und einer vorderen, teilweise weggebrochenen Platte 83 ist eine kreisförmige Bilderscheibe 84 angeordnet. Die kreisförmige Bilderscheibe 84 weist eine Vielzahl von Einzelbildern 85 auf, die wie bei der Bilderscheibe 20 des ersten Ausführungsbeispiels angeordnet sind. Jeweils ein Einzelbild 85 der einen Bewegungsablauf darstellenden Bildfolge ist durch ein in der vorderen Abdeckplatte 83 ausgebildetes Sichtfenster 86 während des Betriebs kurzzeitig stillstehend erkennbar. Da der Mechanismus zur Blockierung bzw. Weiterbewegung der Bilderscheibe 84 des in Figur 6 gezeigten dritten Ausführungsbeispiels von demjenigen des in den Figuren 1 bis 3 gezeigten ersten Ausführungsbeispiels verschieden ist, weist die Bilderscheibe 84 keine umfangsmäßig angeordneten Zacken 25a (vergleiche Figur 3) auf. Die Bilderscheibe 84 ist über eine Niete 87 drehbar um eine vertikal aus der Papierebene herausragende Mitteldrehachse an der hinteren Platte 82 befestigt. Eine Kurbel, bzw. ein Antriebselement 88 ist ebenfalls über die Niete 87 drehbar an der hinteren Platte 82 befestigt. Es sei an dieser Stelle bemerkt, daß die Drehrichtung des in den Figuren 6 und 7 gezeigten dritten Ausführungsbeispiels der vorliegenden Erfindung im Uhrzeigersinn ist, und zwar im Gegensatz zu der Betriebsrichtung im Gegenuhrzeigersinn bei den in den Figuren 1 bis 5 dargestellten ersten beiden Ausführungsbeispielen der vorliegenden Erfindung. Allerdings ist der Drehsinn für die vorliegende Erfindung nicht relevant und für einen Fachmann ist klar, daß die einzelnen Ausführungsbeispiele derart variiert werden können, so daß die erfindungsgemäße Vorrichtung sowohl im Uhrzeigersinn als auch im Gegenuhrzeigersinn betrieben werden kann. Die Kurbel 88 weist ein sich durch ein zentrales in der vorderen Abdeckplatte 83 ausgebildetes Loch 89 erstreckendes langgestrecktes Element 90 auf. Das Element 90 erstreckt sich auf der einen Seite der Niete 87 oberhalb der vorderen Platte 83 und auf der anderen Seite durch eine Öffnung in der Bilderscheibe 84 unterhalb derselben. An dem Ende des Elements 90, daß sich unterhalb der Bilderscheibe 84 befindet ist ein Federdraht 91 befestigt, der eine ähnliche Funktion wie der Federdraht 80 des in den Figuren 4 und 5 gezeigten zweiten Ausführungsbeispiels der vorliegenden Erfindung besitzt. Die Kupplung des Federdrahts 91 mit der Bilderscheibe 84 wird durch eine unter die Bilderscheibe 84 geklebte Lasche 92 realisiert. Innerhalb der Lasche 92, in der der Federdraht 91 geführt ist, besitzt der Federdraht 91 einen gewissen Bewegungsspielraum, wie auch aufgrund der zwei unterschiedlichen in Figur 6 erkennbaren Positionen bzw. Stellungen des Federdrahts 91 in der Lasche 92 erkennbar ist. Die Lasche 92 des in den Figuren 6 und 7 gezeigten dritten Ausführungsbeispiels der Erfindung kann auch als Mitnehmer bezeichnet werden. Umfangsmäßig radial außerhalb der Bilderscheibe 84 weist die hintere Platte 82 eine der Anzahl der Einzelbilder 85 entsprechende Anzahl von vertikalen Blockierstiften 93 auf, die in ihrer Funktionsweise dem einzelnen Blockierstift 71 des in den Figuren 4 und 5 gezeigten zweiten Ausführungsbeispiels der Erfindung ähnlich sind.

Im folgenden wird nun die Funktion des in Figur 6 gezeigten dritten Ausführungsbeispiels der vorliegenden Erfindung näher erläutert. Dreht ein Anwender die Kurbel 88, zum Beispiel indem er seinen Finger in die dafür vorgesehene Schlaufe 94 steckt und die Kurbel 88 in Pfeilrichtung dreht, so biegt sich der in der Lasche 92 geführte und an dem Stift 93 blockierte Federdraht 91, wie in der Zeichnung dargestellt, in Pfeilrichtung durch. Während der Phase der Durchbiegung bzw. Spannung des Federdrahts 91 ist in dem Sichtfenster 86 der vorderen Scheibe 83 das Bild 85 der Bilderscheibe 84 stillstehend erkennbar. Wird nun die Kurbel 88 in Pfeilrichtung weiterbewegt, wird an einem Punkt der Bewegung die Spannung des Federdrahts 91 so groß, daß dieser sich in die ebenfalls in Figur 6 gestrichelt gezeigte Position um einen Blockierstift 93' weiterbewegt. Dabei wird die Bilderscheibe 84 von einem Bild 85 zum nächsten Bild 85' bewegt. Eine weitere Drehung der Kurbel 88 sorgt für eine weitere Vorspannung des Federdrahts 91 und an einem gewissen Punkt der Bewegung erfolgt wiederum ein Wechsel von dem Bild 85 der Bilderscheibe 84 zum nächsten Bild 85" usw. Es sei bemerkt, daß zur vertikalen Führung des Federdrahts 91 während der Bewegung von einem Blockierstift 93 zum nächsten Blockierstift 93' eine horizontale Abdeckung 95 zwischen den Blockierstiften 93 vorgesehen sein kann.

Der Aufbau und die Funktion des in den Figuren 6 und 7 dargestellten Ausführungsbeispiels ist gewissermaßen eine Kombination der in den Figuren 1 bis 5 dargestellten ersten beiden Ausführungsbeispiele. Daher wird zum besseren Verständnis in diesem Zusammenhang auch auf die vorhergehende Beschreibung der Figuren 1 bis 5 Bezug genommen.

In Figur 7 ist nun eine Variante des in Figur 6 dargestellten Ausführungsbeispiels gezeigt. Der Unterschied der in Figur 7 gezeigten Variante der Erfindung zu dem in Figur 6 gezeigten Ausführungsbeispiel besteht darin, daß die Blockierstifte 93 nicht radial außerhalb der Bilderscheibe 84 sondern in etwa an der dem Drehmittelpunkt zugewandten Innenseite der Bilder 85 angeordnet ist. Bei der in der Figur 7 dargestellten Variante sind daher die Blockierstifte 93 unterhalb der Bilderscheibe 84 angeordnet.

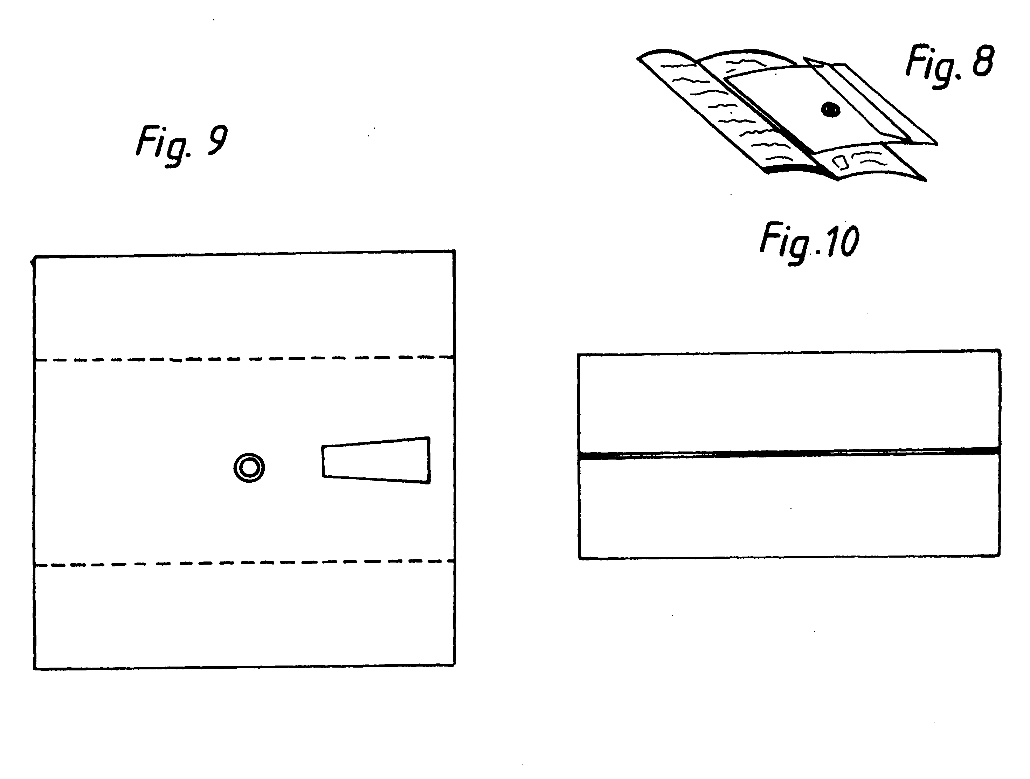

Wie oben bereits erwähnt wurde, soll die erfindungsgemäße planare Filmvorrichtung bzw. das erfindungsgemäße Scheibenkino in der Werbung verwendet werden. Faltet man dazu beispielsweise die erfindungsgemäße Vorrichtung gemäß Figur 1 entlang der in Figur 9 dargestellten Faltlinien, so erhält man das in Figur 10 dargestellte Querformat, daß sich zur Verschickung der erfindungsgemäßen Vorrichtung in Werbebriefen besonders eignet. Alternativ kann die erfindungsgemäße Vorrichtung auch entlang ihrer Längsseite, wie in Figur 8 dargestellt, gefaltet werden, um beispielsweise einer Zeitschrift bzw. einem Prospekt beizuliegen. Somit wird durch die vorliegende Erfindung die Plazierung eines Werbespots in einem Printmedium möglich.

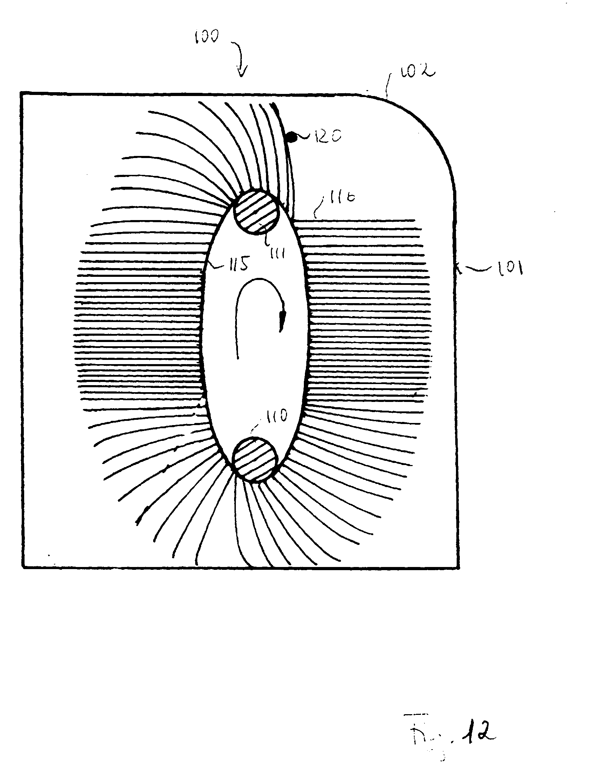

In Figur 11 ist schematisch ein viertes Ausführungsbeispiel der vorliegenden Erfindung dargestellt. Das in Figur 11 dargestellte vierte Ausführungsbeispiel ist im allgemeinen ähnlich dem in Figur 6 dargestellten und in der dazugehörigen Beschreibung beschriebenen dritten ordnet sein, die Teile der ansonsten sichtbaren benachbarten Bilder verdecken und dadurch optisch die Illusion hervorrufen, daß das hinter dem Sichtfenster angeordnete Bild eine rechteckige Form besitzt.

Unter Bezugnahme auf die Querschnittsansicht der Figur 12 wird nun ein fünftes Ausführungsbeispiel der Erfindung beschrieben. Eine Vorrichtung zur Darstellung einer aus einer Vielzahl von Einzelbildern bestehenden Bildfolge 100 weist ein quaderförmiges Gehäuse 101 mit einem auf der Oberseite angeordneten Sichtfenster 102 auf. Innerhalb des Gehäuses 101 sind zwei horizontale Walzen 110 und 111 übereinander angeordnet. Die Walze 110 wird über eine (nicht dargestellte) Antriebsvorrichtung, z. B. einen Elektromotor, gedreht. Die Walze 111 ist eine drehbar gelagerte Mitläuferwalze. Um die beiden Walzen 110, 111 läuft ein (entgegen der Darstellung in der Zeichnung) gespanntes Endlosband bzw. Riemen 115. Das Endlosband 115 weist an seiner Außenseite radial abstehende Plättchen 116 aus Papier, Pappe, Kunststoff oder dergleichen auf. Auf den Plättchen sind (nicht dargestellte) Einzelbilder angeordnet, die in ihrer Gesamtfolge eine Bildfolge eines Bewegungsablaufs ergeben. Ein Anschlagelement 120 ist vorgesehen, um während der Drehung das Endlosband 115 jeweils ein Einzelbild eines Plättchens 116 zu blockieren und das in der Drehrichtung folgende Bild für einen Beobachter durch das Sichtfenster 102 kurzzeitig stillstehend sichtbar zu machen. Dreht sich das Endlosband 115 weiter, so wird das Plättchen 116 durch dessen Vorspannung freigegeben und an dem Anschlag 120 vorbeispringen und ein nächstes Einzelbild der Bildfolge wird durch das Sichtfenster 102 sichtbar.

Bei den in den Figuren dargestellten Ausführungsformen der Erfindung können die Einzelteile der erfindungsgemäßen Vorrichtung beispielsweise aus Karton bzw. Pappe, Metallblech oder Kunststoff hergestellt werden. Diese Materialien eignen sich für eine besonders preiswerte Herstellung und Montage.

Die Erfindung wurde anhand bevorzugter Ausbildungsbeispiele erläutert. Dem Fachmann sind jedoch zahlreiche Abwandlungen und Ausgestaltungen möglich, ohne daß dadurch der der Erfindung zugrundeliegende Gedanke verlassen wird. So können beispielsweise die an der Drehscheibe 20 und der Antriebsscheibe 30 ausgebildeten Zähne bzw. Nocken auch eine andere als die oben beschriebene und in den Zeichnungen dargestellte Form besitzen, solange der erfindungsgemäße Blockier- bzw. Rastungs- und Freigabeeffekt vorhanden ist. Ferner bestünde, falls gewünscht, auch die Möglichkeit nicht nur ein, sondern mehrere, zum Beispiel zwei Sichtfenster in der vorderen Platte 10 radial versetzt anzubringen und die Drehscheibe mit zwei Bildfolgen bewegter Bilder in radialer Richtung versetzt derart zu versehen, daß die Bilder der einen Folge im ersten und der zweiten Bildfolge im zweiten Sichtfenster dargestellt werden. Schließlich ist die Erfindung nicht auf die Verwendung von Scheiben bzw. einem Drehantrieb beschränkt, da für den Fachmann klar ist, daß die Erfindung auch unter Verwendung von Streifen und einem Linearantrieb verwirklicht werden kann. In diesem Fall muß (bei einer vorgegebenen Filmrichtung) allerdings die Vorrichtung nach einem Durchlauf zurückgesetzt werden. Ferner kann auch ein Getriebe bzw. eine Untersetzung in Verbindung mit dem manuellen Drehantrieb verwendet werden. Dies kann einerseits zur Erhöhung/Verminderung der Drehgeschwindigkeit und andererseits zur Kraftwandlung bei einer aus einer großen Zahl von Einzelbildern bestehenden und damit schweren Drehscheibe vorteilhaft sein. Im Betrieb wird die erfindungsgemäße Vorrichtung vorzugsweise auf eine Unterlage, wie z. B. eine Tischoberfläche, gelegt und an Stellen außerhalb von beweglichen Teilen auf diese zur Fixierung der Vorrichtung gedrückt. An diesen Stellen ist vorzugsweise ein Chip mit einem gespeicherten Klangmuster, wie z. B. einem Lied, in Kombination mit einem Drucksensor angebracht, wie er bei Glückwunschkarten bekannt ist. Fixiert der Anwender die Vorrichtung und drückt diese dazu auf eine Unterlage, so wird der Drucksensor betätigt, das Klangmuster ertönt und es kann dadurch auch eine Tonfilm bzw. ein Kurzfilm mit musikalischer Untermalung realisiert werden. Abschließend sei bemerkt, das für einen Fachmann klar ist, daß die einzelnen Merkmale der beschriebenen Ausführungsbeispiele auch miteienander kombiniert werden können, um Ausführungsbeispiele zu ergeben, die im Rahmen der vorliegenden Offenbarung liegen. So kann beispielsweise als Drehscheibe auch eine einstückige Bilderscheibe mit einer der Anzahl von Bildern entsprechenden Anzahl von radial vorstehenden Federdrähten vorgesehen sein (Kombination der ersten und zweiten Ausführungsbeispiele der vorliegenden Erfindung). Schließlich können die Funktionen der einzelnen Elemente der beschriebenen Ausführungsbeispiele auch vertauscht werden. D. h. es können z. B. die radial außerhalb der Drehscheibe angeordneten Zapfen elastisch und der aus der Drehscheibe vorstehende Draht starr sein.

## Patentansprüche

1. Vorrichtung (1) zur Darstellung einer aus einer Vielzahl von Einzelbildern (22,22';85,85',85'') bestehenden Bildfolge, mit einer ein Sichtfenster (11;86) aufweisenden Abdeckplatte (10;83) und einer drehbar gelagerten Drehscheibe (20,70;84), auf der mit gleichem Abstand zu ihrer Drehachse (21;87) in Umfangsrichtung verteilt eine Vielzahl von Einzelbildern (22,22';85,85',85'') angebracht ist, die beim Verdrehen der Drehscheibe (20,70;84) an dem Sichtfenster (11;87) der Abdeckplatte (10;83) vorbeigeführt wird, und wobei sich die Drehscheibe (20,70;84) im Betrieb intermittierendend derart dreht, daß jeweils ein Einzelbild der Drehscheibe (20,70;84) hinter dem Sichtfenster (11;86) für eine relativ kurze Zeitspanne stillsteht, **gekennzeichnet durch** eine Vorspanneinrichtung (40; 80;91), die die Drehscheibe (20,70;84) in den Ruhephasen ihrer intermittierenden Bewegung für eine zum Bildwechsel dienende Weiterdrehung der Drehscheibe (20,70;84) vorspannt.

2. Vorrichtung (1) zur Darstellung einer aus einer Vielzahl von Einzelbildern (22,22';85,85',85'') bestehenden Bildfolge, mit einer ein Sichtfenster (11;86) aufweisenden Abdeckplatte (10;83) und einer drehbar gelagerten Drehscheibe (20,70;84), auf der mit gleichem Abstand zu ihrer Drehachse (21;87) in Umfangsrichtung verteilt eine Vielzahl von Einzelbildern (22,22';85,85',85'') angebracht ist, die beim Verdrehen der Drehscheibe (20,70;84) an dem Sichtfenster (11;87) der Abdeckplatte (10;83) vorbeigeführt wird, und wobei sich die Drehscheibe (20,70;84) im Betrieb intermittierendend derart dreht, daß jeweils ein Einzelbild der Drehscheibe (20,70;84) hinter dem Sichtfenster (11;86) für eine relativ kurze Zeitspanne stillsteht, **gekennzeichnet durch** Mittel (25,14,15; 80,71;91,93) zum Blockieren der Bewegung der Drehscheibe (20,70;84) und Mittel (35;71;91) zum Freigeben der Drehscheibe (20,70;84) zur Wandlung eines kontinuierlichen, insbesondere manuellen, Antriebs der Drehscheibe (20,70;84) in die intermittierende Bewegung.

3. Vorrichtung (1) zur Darstellung einer aus einer Vielzahl von Einzelbildern (22,22';85,85',85'') bestehenden Bildfolge, mit einer ein Sichtfenster (11;86) aufweisenden Abdeckplatte (10;83) und einem linear bewegbar gelagerten Bilderstreifen, auf dem nebeneinander eine Vielzahl von Einzelbildern (22,22';85,85',85'') angebracht ist, die beim Verdrehen des Bilderstreifens an dem Sichtfenster (11;87) der Abdeckplatte (10;83) vorbeigeführt wird, und wobei sich der Bilderstreifen im Betrieb intermittierendend derart linear fortbewegt, daß jeweils ein Einzelbild des Bilderstreifens hinter dem Sichtfenster (11;86) für eine relativ kurze Zeitspanne stillsteht, **gekennzeichnet durch** eine Vorspanneinrichtung (40;80;91), die den Bilderstreifen in den Ruhephasen seiner intermittierenden Bewegung für eine zum Bildwechsel dienende Weiterbewegung des Bilderstreifens vorspannt.

4. Vorrichtung (1) zur Darstellung einer aus einer Vielzahl von Einzelbildern (22,22';85,85',85'') bestehenden Bildfolge, mit einer ein Sichtfenster (11;86) aufweisenden Abdeckplatte (10;83) und einem linear bewegbar gelagerten Bilderstreifen, auf dem nebeneinander eine Vielzahl von Einzelbildern (22,22'; 85,85',85'') angebracht ist, die beim Verdrehen des Bilderstreifens an dem Sichtfenster (11;87) der Abdeckplatte (10;83) vorbeigeführt wird, und wobei sich der Bilderstreifen im Betrieb intermittierendend derart linear fortbewegt, daß jeweils ein Einzelbild des Bilderstreifens hinter dem Sichtfenster (11;86) für eine relativ kurze Zeitspanne stillsteht, **gekennzeichnet durch** Mittel (25,14,15;80,71;91,93) zum Blockieren der Bewegung des Bilderstreifens und Mittel (35;71;91) zum Freigeben des Bilderstreifens zur Wandlung eines kontinuierlichen, insbesondere manuellen, Antriebs des Bilderstreifens in die intermittierende Bewegung.

5. Vorrichtung (100) zur Darstellung einer aus einer Vielzahl von Einzelbildern bestehenden Bildfolge, die folgendes aufweist:
- ein Gehäuse (101) mit einem Sichtfenster (102);
- eine drehbar gelagerte Walze (110);
- eine Antriebsvorrichtung zum Antreiben der Walze (110);
- ein um die Walze (110) geführter Riemen (115) mit einer Vielzahl daran angebrachter radial abstehender Plättchen (116) mit je einem Einzelbild; und
- ein Anschlagelement (120), das die Weiterbewegung eines Plättchens (116) blockiert, und das derart angeordnet ist, daß ein Einzelbild während der Drehung des Riemens (115) unter dem Sichtfenster für eine gewisse Zeit stillstehend zur Ansicht gebracht wird.
